# EUROPÄISCHE PATENTSCHRIFT

(11) **EP 2 070 647 B1**
(45) Veröffentlichungstag und Bekanntmachung des Hinweises auf die Patenterteilung: **02.03.2011**
(21) Anmeldenummer: 07123174.0
(22) Anmeldetag: 13.12.2007
(51) Int. Cl.: B23Q 7/14, B23Q 37/00

(54) **Modulare Fertigungslinie**
Modular production line
Ligne de fabrication modulaire

(43) Veröffentlichungstag der Anmeldung: 17.06.2009
(73) Patentinhaber: ETA SA Manufacture Horlogère Suisse, 2540 Grenchen (CH)
(72) Erfinder: Senn, Jean-Philippe, 2525 Le Landeron (CH); Durand, Friedrich, 4500 Solothurn (CH); Bär, Manfred, 78147 Vöhrenbach (DE)
(74) Vertreter: Couillard, Yann Luc Raymond

(56) Entgegenhaltungen:
- EP-A- 0 517 003
- EP-A- 0 773 087
- WO-A-02/051582
- DE-A1- 4 435 199
- DE-A1- 4 437 364
- DE-A1- 10 106 193
- DE-A1- 19 756 278
- DE-U1- 8 908 895

## Beschreibung

Die vorliegende Erfindung betrifft eine Fertigungslinie zum Herstellen von Serien identischer Gegenstände. Derartige Fertigungslinien kommen heute in fast allen Industriezweigen zur Anwendung, insbesondere in der Elektronik- und Automobilindustrie, aber auch in der Uhrmacherei. Unabhängig vom Einsatzbereich ist das Grundprinzip dabei immer ähnlich: Ein zu bearbeitendes Werkstück wird auf einem Transportband von einer Bearbeitungsstation zur nächsten transportiert, und an jeder Bearbeitungsstation wird ein Fertigungsschritt durchgeführt. Dabei kann beispielsweise ein Bauteil an dem Werkstück montiert werden, ein elektronisches Bauteil auf eine Platine gelötet werden, ein Test oder eine Messung durchgeführt werden, oder das Werkstück in sonstiger Weise bearbeitet werden.

DE 44 37 364 offenbart eine modulare Fertigungslinie nach dem Oberbegriff von Anspruch 1.

In vielen Industriezweigen kommt es vor, dass Gegenstände nur in vergleichsweise kleinen Serien gefertigt werden. In solchen Fällen muss eine Fertigungslinie umgerüstet werden können, ohne dass die Fertigung über einen langen Zeitraum stillsteht. In der Uhrenindustrie werden beispielsweise verschiedene Modelle in vergleichsweise kleinen Serien nacheinander gefertigt, so dass die verwendeten Fertigungslinien häufig umgerüstet werden müssen. Bisher ist dies mit sehr grossem Aufwand verbunden, da nicht mehr oder an anderer Stelle benötigte Bearbeitungsstationen aufwendig demontiert werden müssen. Zudem entstehen durch die Demontage einer Bearbeitungsstation, mit der üblicherweise auch ein Abschnitt des Transportbandes verbunden ist, Lücken in der Fertigungslinie, die ein Abstellen der gesamten Linie erforderlich machen. Die Umrüstung der heutigen Fertigungslinien ist also nicht nur arbeits- und zeitaufwendig, sondern führt zu einem kostspieligen Stillstand der Produktion. Die gleichen Probleme treten im Übrigen nicht nur bei einer Umrüstung, sondern auch bei Reparaturarbeiten und Ausfällen auf.

Der vorliegenden Erfindung liegt daher die Aufgabe zugrunde, eine Fertigungslinie zu schaffen, die möglichst schnell und kostengünstig umgerüstet werden kann.

Diese Aufgabe wird erfindungsgemäss durch eine modulare Fertigungslinie gemäss Anspruch 1 gelöst.

Die modulare Fertigungslinie umfasst wenigstens ein Grundgestell, auf dem ein Transportband zum Transportieren von Werkstückträgern verläuft. Auf dem Transportband können selbstverständlich anstelle von Werkstückträgern, auf denen jeweils ein zu bearbeitendes Werkstück liegt, auch Werkstücke selbst transportiert werden. Der Einfachheit halber wird im Folgenden aber davon ausgegangen, dass die zu bearbeitenden Werkstücke auf Werkstückträgern liegen.

Ferner umfasst die modulare Fertigungslinie eine Vielzahl von auf dem Grundgestell befestigbaren Fertigungseinheiten. Jede Fertigungseinheit weist wenigstens ein Funktionselement und wenigstens eine Steuereinheit auf. Bei dem Funktionselement kann es sich beispielsweise um einen Roboter handeln, der ein zusätzliches Bauteil montiert, das Werkstück lackiert oder beschichtet, einen Test oder eine Messung durchführt oder sonstige Montage- oder Bearbeitungsschritte durchführt. Der Begriff "Funktionselement", umfasst im Kontext der vorliegenden Erfindung aber nicht nur Roboter, sondern jegliche in Fertigungslinien einsetzbare Werkzeuge oder Bearbeitungseinheiten, Zuführeinheiten (so genannte "Feeder") etc. Jede Fertigungseinheit umfasst zudem einerseits Mittel zum Befördern eines Werkstückträgers von dem Transportband des Grundgestells zu dem Funktionselement und andererseits Mittel zum Befördern eines Werkstückträgers von dem Funktionselement zurück zu dem Transportband.

Das Grundgestell mit dem Transportband ist unabhängig von den Fertigungseinheiten, und muss daher bei einem Umrüsten der Fertigungslinie nicht demontiert werden. Auch das Transportband muss nicht angehalten werden, da unabhängig vom Vorhandensein von Fertigungseinheiten Werkstückträger mit darauf liegenden Werkstücken transportiert werden können. Zum Umrüsten der Fertigungslinie müssen also lediglich die benötigten Fertigungseinheiten eingesetzt werden. Die einzelnen Fertigungseinheiten sind voneinander unabhängig, so dass jede einzeln ausgetauscht oder umgesetzt werden kann, ohne dass dadurch der Rest der Fertigungslinie beeinträchtigt würde. Da jede Fertigungseinheit mit einer Steuereinheit und mit Mitteln zum Befördern eines Werkstückträgers von dem Transportband zu dem Funktionselement und umgekehrt ausgestattet ist, wird kein Zentralrechnung zur Steuerung der Fertigungslinie benötigt, der im Fall einer Umrüstung aufwendig neu programmiert werden müsste.

Die Mittel zum Befördern eines Werkstückträgers von dem Transportband zu dem Funktionselement umfassen ein erstes Förderband, und die Mittel zum Befördern eines Werkstückträgers von dem Funktionselement zu dem Transportband umfassen ein zweites Förderband. Diese Förderbänder verlaufen vorteilhafterweise senkrecht zu dem Transportband, wenn die Fertigungseinheit an dem Grundgestell befestigt ist.

Die Mittel zum Befördern eines Werkstückträgers von und zu dem Funktionselement umfassen jeweils einen oberhalb des jeweiligen Förderbandes angeordneten und in dessen Förderrichtung beweglichen Schieber. Mit Hilfe des ersten Schiebers kann ein Werkstückträger von dem Transportband auf das erste Förderband geschoben werden, auf dem er dann zu dem Funktionselement befördert wird. Nach erfolgter Bearbeitung durch das Funktionselement wird der Werkstückträger von dem zweiten Förderband zurück in Richtung des Transportbandes befördert und schliesslich von dem zweiten Schieber wieder auf das Transportband geschoben. Die Werkstückträger werden dabei vorzugsweise nicht gestoppt, sondern die Schieber ermöglichen es, sie aus der Bewegung auf dem Transportband heraus in Richtung des Funktionselementes der Fertigungseinheit umzulenken. Dadurch werden die bei einem abrupten Stoppen der Werkstückträger auftretenden hohen Beschleunigungen vermieden, und der Ausschleusungsvorgang von dem Transportband zu der Fertigungseinheit nimmt nur sehr wenig Zeit in Anspruch.

Um ruckartige Bewegungen und hohe Beschleunigungen der Werkstückträger und damit der darauf befindlichen Werkstücke zu vermeiden, können die Schieber so angesteuert werden, dass sich eine in etwa sinusförmige Geschwindigkeitskurve des Schiebers ergibt. Der Werkstückträger wird also nach und nach bis auf eine Maximalgeschwindigkeit beschleunigt, und vor der Übergabe an das Förderband bzw. das Transportband wieder abgebremst. Auf diese Weise wird die Zeit, die zum Verschieben des Werkstückträgers benötigt wird, minimiert, ohne dass das auf dem Werkstückträger befindliche Werkstück den bei den hohen Beschleunigungen und ruckartigen Bewegungen auftretenden Kräften ausgesetzt würden.

Gemäss einer besonders vorteilhaften Ausführungsform der Erfindung ist das Transportband in etwa doppelt so breit wie die beiden Förderbänder, die zum Transport von dem Transportband zu dem Funktionselement bzw. umgekehrt dienen. Die Breite eines Förderbandes entspricht mindestens der Breite eines Werkstückträgers, und ein Transportband mit der doppelten Breite kann dann zweispurig betrieben werden. Ein zweispuriger Betrieb des Transportbandes ermöglicht eine schnellere und effizientere Verteilung der Werkstückträger auf die Fertigungseinheiten, so dass in der gleichen Zeitspanne mehr Werkstücke die Fertigungslinie durchlaufen können als bei einem einspurigen Betrieb. Es können selbstverständlich auch Transportbänder eingesetzt werden, deren Breite ein Vielfaches der Breite eines Werkstückträgers beträgt, und die dementsprechend dann mehrspurig betrieben werden können. Die Fertigungseinheiten können alle auf einer Seite des Transportbandes angeordnet werden, so dass eine der Spuren gewissermassen als Abbiegespur fungiert, während eine den Fertigungseinheiten abgewandte Spur als Überholspur dient.

Zum Verschieben der Werkstückträger von einer Spur des Transportbandes auf die andere sind weitere Schieber vorgesehen. Die Fertigungseinheiten umfassen jeweils einen weiteren Schieber, der in Transportrichtung des Transportbandes vor den Mitteln zum Befördern eines Werkstückträgers von dem Transportband zu dem Funktionselement angeordnet ist, sich also vor einem ersten Förderband mit dazugehörigem Schieber befindet. Dieser zusätzliche Schieber kann einen auf der von der Fertigungseinheit abgewandten Spur ("Überholspur") des Transportbandes liegenden Werkstückträger auf die der Fertigungseinheit zugewandte Spur ("Abbiegespur") des Transportbandes verschieben. Anschliessend kann dieser Werkstückträger dann von einem in Transportrichtung des Transportbandes weiter hinten liegenden Schieber, der Teil der Mittel zum Befördern eines Werkstückträgers von dem Transportband zu dem Funktionselement ist, auf ein Förderband geschoben werden, welches ihn dann zu dem Funktionselement bringt. Ebenfalls in Transportrichtung des Transportbandes vor den Mitteln zum Befördern eines Werkstückträgers zu dem Funktionselement kann ein weiterer zusätzlicher Schieber vorgesehen sein, der dazu dient, einen Werkstückträger, der nicht zu der betreffenden Fertigungseinheit hin ausgeschleust werden soll, von der der Fertigungseinheit zugewandten Spur ("Abbiegespur") des Transportbandes auf die der Fertigungseinheit abgewandte Spur ("Überholspur") zu verschieben.

Das Grundgestell weist im Übrigen vorzugsweise einen Antrieb zum Antreiben des Transportbandes auf. Im Prinzip genügt ein einfacher Antriebsmotor, der das Transportband mit konstanter Geschwindigkeit antreibt. Das Grundgestell kann so ohne eine Steuerung auskommen, wodurch ein Umrüsten der Fertigungslinie erleichtert wird.

Das Transportband ist vorzugsweise mit einer abnehmbaren Abdeckung versehen, um die Werkstückträger und die darauf liegenden Teile vor Staub zu schützen. Beispielsweise kann eine Haube aus durchsichtigem Plexiglas verwendet werden. Diese steht vorzugsweise im Vergleich zur Umgebung unter einem Überdruck, so dass ein besonders effizienter Staubschutz erzielt wird. An der Abdeckung können Trennstege zur Einteilung des Transportbandes in mehrere Spuren und seitliche Begrenzungsstege angebracht sein, so dass das Transportband selbst nicht auf eine bestimmte Anordnung von Fertigungseinheiten oder auf eine bestimmte Dimension von Werkstückträgern festgelegt ist.

Das Grundgestell kann einen Tisch umfassen, der vorzugsweise aus Granit hergestellt ist und eine rechteckige Tischplatte besitzt. Das Transportband kann dann an einer Längsseite des Tisches befestigt sein und parallel zu dieser Längsseite verlaufen. Auf der Tischplatte können in einfacher Weise die Fertigungseinheiten nebeneinander befestigt werden, es kann aber auch ein Handarbeitsplatz eingerichtet werden. Eine Fertigungslinie wird in den meisten Fällen mehrere solche Grundgestelle umfassen, die so nebeneinander aufgebaut werden, dass die jeweils zu einem Grundgestell gehörigen Transportbänder eine kontinuierliche Transportstrecke bilden.

Um die Montage und den Austausch der Fertigungseinheiten zu erleichtern, sind vorzugsweise an einer Unterseite der Fertigungseinheiten jeweils wenigstens zwei, vorzugsweise aber drei Zentrierelemente vorgesehen, die mit komplementären Zentrierelementen auf einer Oberfläche des Grundgestells zusammenwirken. Beispielsweise können auf der Oberfläche des Grundgestells halbkugelförmige Ausnehmungen und an der Unterseite der Fertigungseinheiten dazu passende drehbar gelagerte Kugeln vorgesehen sein, wobei die Kugeln bei korrekt ausgerichteter Fertigungseinheit in den halbkugelförmigen Ausnehmungen auf der Oberfläche des Grundgestells liegen. Die drehbar gelagerten Kugeln an der Unterseite der Fertigungseinheiten erleichtern im übrigen nicht nur die korrekte Ausrichtung der Fertigungseinheiten auf der Oberfläche des Grundgestells, sondern sie erlauben es zudem, die Fertigungseinheit auf der Oberfläche des Grundgestells rollend zu verschieben, bis die Kugeln in den hierfür vorgesehenen Ausnehmungen zu liegen kommen. Anstelle von zwei oder drei Zentrierelementen für je eine Fertigungsstation kann auf der Oberfläche des Grundgestells auch eine rasterartige Anordnung von Zentrierelementen vorgesehen sein. Damit erhält man eine höhere Flexibilität und kann Fertigungseinheiten in unterschiedlichen Massen und mit an unterschiedlichen Stellen vorgesehenen Zentrierelementen korrekt ausrichten und montieren.

Gemäss einer weiteren vorteilhaften Ausführungsform der Erfindung umfasst wenigstens eine der Fertigungseinheiten eine Zuführeinrichtung zum Zuführen von Teilen. So können beispielsweise Schrauben oder zu montierende Bauteile an das Funktionselement geliefert werden. Selbstverständlich können auch mehrere Fertigungseinheiten derartige Zuführeinrichtungen umfassen. Solche Zuführeinrichtungen, so genannte "Feeder", sind auf dem Markt in verschiedenen Ausführungen erhältlich. In Abhängigkeit von dem an einer Fertigungseinheit auszuführenden Bearbeitungsschritt und den dafür benötigten Teilen, können unterschiedliche Typen von Zuführeinrichtungen ausgewählt und an der Fertigungseinheit installiert werden.

Gemäss einer besonders vorteilhaften Ausführungsform der Erfindung sind die Fertigungseinheiten jeweils mit wenigstens einer Leseeinheit versehen, die mit der Steuereinheit der jeweiligen Fertigungseinheit verbunden ist. Bei der Leseeinheit kann es sich beispielsweise um einen RFID - Lesekopf handeln. An den Werkstückträgern oder auch den Werkstücken selbst können RFID - Transponder angebracht werden, in denen die Fertigung betreffende Daten abgespeichert sind. So kann beispielsweise eine Reihenfolge durchzuführender Bearbeitungsschritte oder eine Reihenfolge, in der die Fertigungseinheiten angesteuert werden sollen, in dem RFID - Transponder gespeichert werden. Die Leseeinheit kann dann den als nächstes durchzuführenden Bearbeitungsschritt auslesen, und diese Information an die Steuereinheit weitergeben. Diese stellt dann fest, ob es sich um den Bearbeitungsschritt handelt, der von der betreffenden Fertigungseinheit durchgeführt wird. Wenn dies der Fall ist, so erteilt sie den Befehl, den entsprechenden Werkstückträger mit Hilfe der hierfür vorgesehenen Mittel von dem Transportband zu dem Funktionselement der Fertigungseinheit zu befördern.

Ebenso können die Fertigungseinheiten eine Schreibeinheit aufweisen, welche Daten modifizieren kann, die in einem mit einem Werkstückträger verbundenen Speicher gespeichert sind. Wenn an den Werkstückträgern oder den Werkstücken RFID - Transponder befestigt sind, so können diese einen beschreibbaren Speicher aufweisen, in dem, wie oben beschrieben, eine Reihenfolge von Bearbeitungsschritten abgespeichert ist. Bevor der Werkstückträger von einer Fertigungseinheit wieder zurück auf das Transportband befördert wird, kann die mit der Steuereinheit verbundene Schreibeinheit in dem Speicher dieses Werkstückträgers vermerken, dass der entsprechende Bearbeitungsschritt durchgeführt worden ist. Der nachfolgende vorgesehene Bearbeitungsschritt rückt in dem Speicher dann an die Stelle des nächsten auszuführenden Bearbeitungsschrittes vor.

Die Erfindung betrifft auch ein Verfahren zum Betreiben einer modularen Fertigungslinie wie sie vorstehend beschrieben wurde.

Gemäss dem erfindungsgemässen Verfahren werden mit einem beschreibbaren Speicher versehene Werkstückträger auf einem Transportband transportiert, wobei in dem Speicher eine Reihenfolge durchzuführender Montageschritte abgespeichert ist. Mit Hilfe einer zur der nächsten Fertigungseinheit gehörenden Lesereinheit wird ein in diesem Speicher gespeicherter Wert, welcher den nächsten durchzuführenden Montageschritt repräsentiert, ausgelesen. Dieser Wert wird dann mit einem den von der betreffenden Fertigungseinheit durchführbaren Montageschritt repräsentierenden Wert verglichen. Falls die beiden Werte übereinstimmen, wird der Werkstückträger von dem Transportband zu dem Funktionselement der Fertigungseinheit befördert. Das Funktionselement führt dann einen Bearbeitungsschritt durch, beispielsweise einen Montageschritt, eine Messung oder einen Test. Schliesslich werden die in dem Speicher des Werkstückträgers gespeicherten Daten modifiziert, und der Werkstückträger wird von dem Funktionselement zurück zu dem Transportband befördert.

Zur Steuerung der gesamten Fertigungslinie wird dank der jeweils mit einer Steuereinheit verbundenen Lese- und Schreibeinheiten keine zentrale Steuereinheit benötigt, sondern mit Hilfe der in den RFID - Transpondern gespeicherten Daten sorgt jede Fertigungseinheit selbst dafür, dass die Werkstückträger zum richtigen Zeitpunkt zu dem zu der gehörenden Funktionselement befördert werden.

Ein weiterer Vorteil der erfindungsgemässen Fertigungslinie ist im Übrigen, dass die modulare Anordnung in Kombination mit einer möglichst kompakten Bauweise der Fertigungseinheiten dazu führt, dass sowohl die Werkstückträger als auch sämtliche anderen beweglichen Teile, wie beispielsweise ein Montageroboter, nur vergleichsweise kurze Wege zurücklegen müssen. Dadurch kann auch bei einer im Vergleich zu den bisher verwendeten Fertigungslinien geringen Geschwindigkeit des Transportbandes, eventueller Förderbänder und Roboter eine Fertigung in sehr kurzer Zeit und damit eine hohe Produktivität erzielt werden. Anders als bei den bisher üblichen hohen Geschwindigkeiten der bewegten Elemente und den dabei auftretenden Kräften wird jedoch keine Sicherheitsabdeckung mehr benötigt, da die Gefährdung umstehender Personen deutlich reduziert ist. Der Montagevorgang kann somit gefahrlos von umstehenden Bedienpersonen beobachtet und kontrolliert werden.

Im Folgenden soll die Erfindung anhand eines bevorzugten Ausführungsbeispiels und unter Bezugnahme auf die beigefügten Zeichnungen näher beschrieben werden.

Dabei zeigen die Zeichnungen im Einzelnen:
Fig. 1 : eine perspektivische Ansicht eines Grundgestells für eine Fertigungslinie,
Fig.2: eine perspektivische Ansicht mehrerer miteinander verbundener Grundgestelle,
Fig. 3 : eine perspektivische Ansicht einer Fertigungseinheit zur Befestigung auf dem Grundgestell aus Fig. 1,
Fig. 4 : eine perspektivische Ansicht des Grundgestells aus Fig. 1 mit einer darauf befestigten Fertigungseinheit,
Fig. 5 : eine perspektivische Ansicht des Grundgestells aus Fig. 1 mit zwei Fertigungseinheiten,
Fig. 6: eine perspektivische Ansicht des Grundgestells aus Fig. 1 mit drei Fertigungseinheiten.

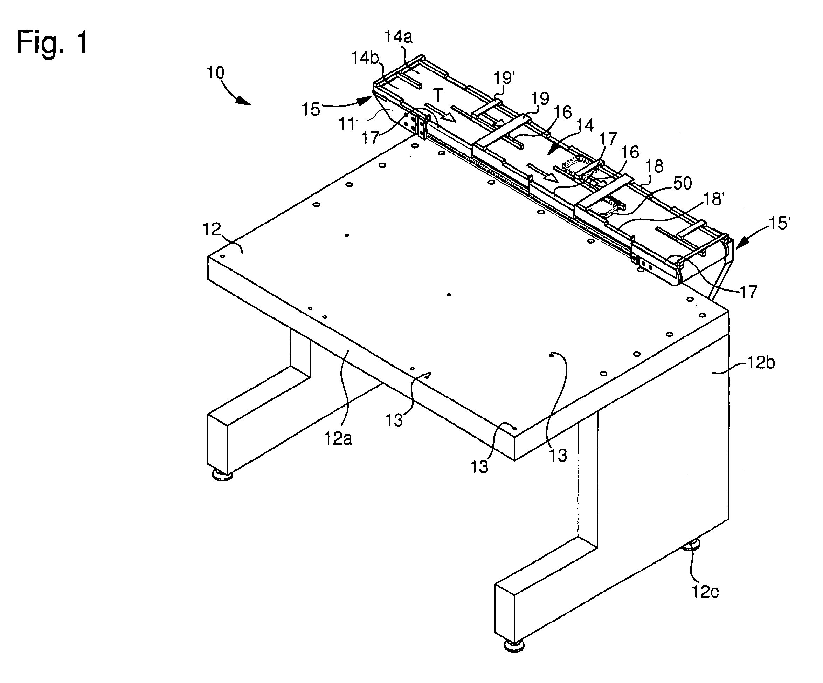

Fig. 1 zeigt ein Grundgestell 10, welches Bestandteil einer modularen Fertigungslinie gemäss der vorliegenden Erfindung ist. Das Grundgestell 10 besteht im Wesentlichen aus einem Tisch 12 aus Granit mit einer rechteckigen Tischplatte 12a und zwei L-förmigen Seitenteilen 12b, die auf höhenverstellbaren Füssen 12c ruhen. An einer der Längsseiten des Tisches 12 ist ein endlos umlaufendes Transportband 14 angebracht, welches oberhalb der Tischplatte 12a parallel zu dieser verläuft. Das Transportband 14 ist an einem ersten Umlenkpunkt 15', der in etwa auf der Höhe des in Fig. 1 rechts liegenden Tischendes liegt, über eine drehbar gelagerte, angetriebene Umlenkwalze geführt. Dieser Umlenkpunkt 15' kann auch aussenseitig der Tischplatte liegen, so dass bei zwei nebeneinander stehenden Tischen eine Lücke zwischen den Tischplatten entsteht. Zum Antreiben der Umlenkwalze ist ein Motor vorgesehen, der in den Figuren nicht erkennbar ist, und das Transportband 14 mit konstanter Geschwindigkeit in eine Transportrichtung T antreibt. An einem zweiten Umlenkpunkt 15, der in etwa auf der Höhe des in Fig. 1 links liegenden Tischendes liegt, ist das Transportband 14 über eine dünne Umlenkwelle geführt, die seitlich ausserhalb des Transportbandes 14 in ein Gestell 11 fest eingespannt ist, und auf der mehrere voneinander beabstandete Gleitbuchsen drehbar angeordnet sind. Die Umlenkwelle ist dabei mit zwischen den Gleitbuchsen eingreifenden Stützstegen oder Auflagestiften abgestützt. Eine derartige Umlenkeinrichtung ist in der deutschen Patentanmeldung vom 14. August 2006 mit dem Aktenzeichen 10 2006 038 185.8 der IWB Industrietechnik GmbH genauer beschrieben. Durch den kleinen Radius der abgestützten Umlenkwelle können auch kleine Teile von einem weiteren Transportband an das Transportband 14 übergeben werden, ohne in einen Zwischenraum zwischen den Umlenkpunkten der beiden Transportbänder zu fallen.

In der Fig. 1 sind beispielhaft zwei Werkstückträger 50 dargestellt, die im Wesentlichen die Form von Tellern mit einem eine rechteckige Grundfläche umgebenden Rahmen besitzen. Selbstverständlich können auch beliebige andere Werkstückträger verwendet werden, und es ist auch möglich, zu bearbeitende Werkstücke ohne einen solchen Träger direkt auf dem Transportband zu transportieren.

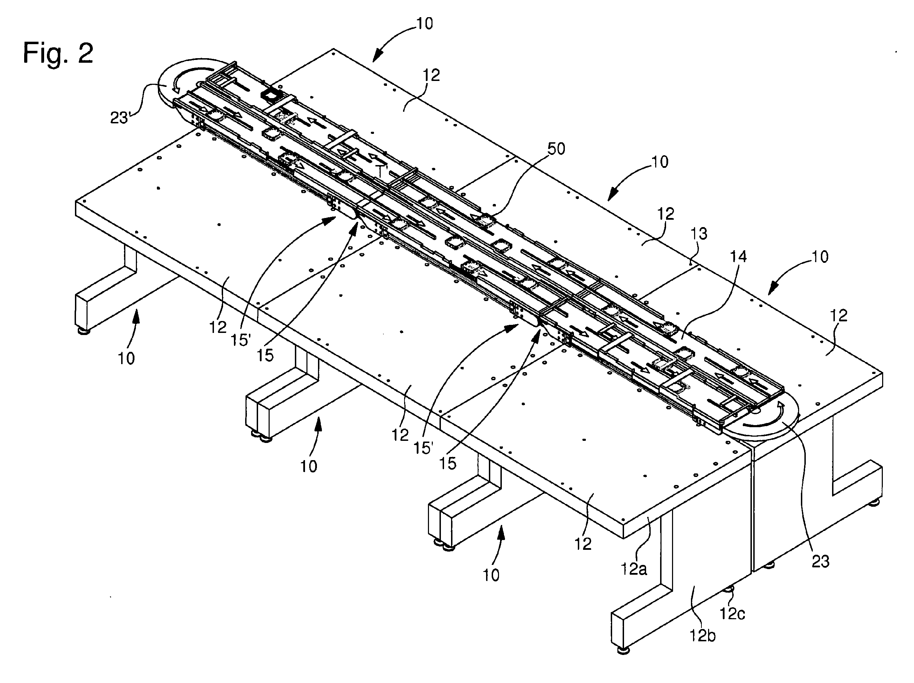

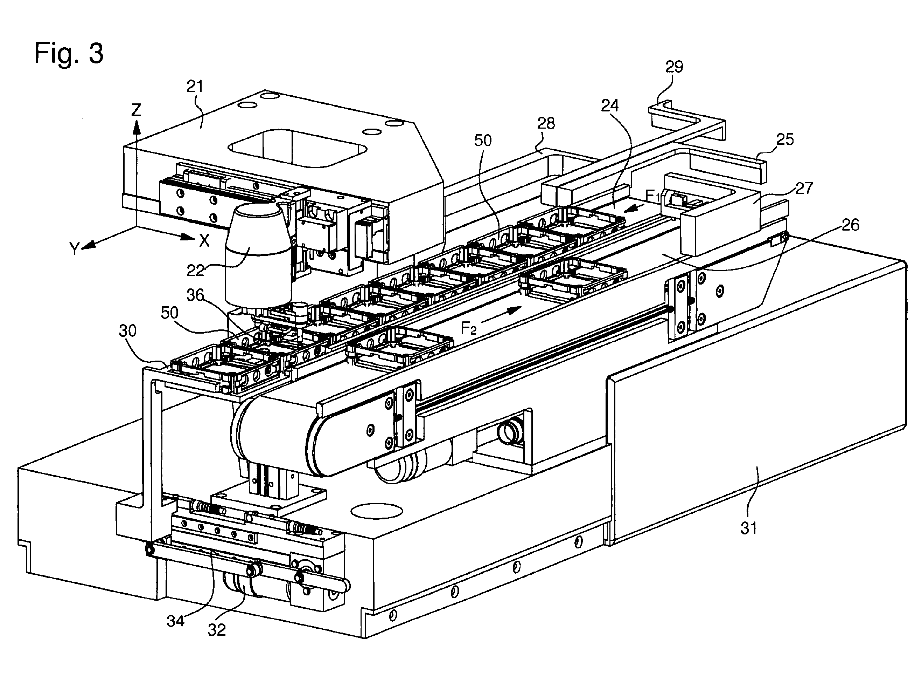

Wie man in Fig. 1 erkennt, wird das Transportband 14 zweispurig betrieben. Jede der beiden Spuren 14a, 14b ist gerade breit genug für einen Werkstückträger 50. An den Aussenseiten des Transportbandes 14 dienen sich in Transportrichtung T erstreckende Begrenzungsstege 18, 18' als Führung für die Werkstückträger 50. Die beiden Spuren 14a, 14b sind von Trennstegen 16 getrennt, die parallel zu den seitlichen Begrenzungsstegen 18, 18' verlaufen und von Brücken 19, 19' gehalten werden. Dabei wechselt sich jeweils eine Brücke 19, die sich quer über die gesamte Breite des Transportbandes 14 erstreckt, mit einer Brücke 19' ab, die sich lediglich von einem Trennsteg 16 in der Mitte des Transportbandes 14 bis zu einem der Begrenzungsstege 18 erstreckt. An der dem Tisch 12 zugewandten Seite des Transportbandes 14 sind insgesamt drei Andockbereiche 17 vorgesehen, in denen der Begrenzungssteg 18' ausgeschnitten ist. Im Bereich dieser Andockbereiche 17 können die Werkstückträger von dem Transportband 14 an eine Fertigungseinheit 20 übergeben werden (vgl. Fig. 3 bis 6), wie weiter unten genauer erläutert wird. Die Begrenzungsstege 18, 18' und die Trennstege 16 sind zwar in Fig. 2 dargestellt, sind aber vorzugsweise nicht mit dem Transportband 14 verbunden, sondern entweder an einer in den Figuren nicht dargestellten Abdeckung für das Transportband, oder an Fertigungseinheiten 20, 20', 20" befestigt. Die Position und Breite der Andockbereiche 17 kann somit an die Dimensionen und die Anordnung der Fertigungseinheiten 20, 20', 20" angepasst werden.

Auch zwischen den Trennstegen 16, welche die beiden Spuren 14a, 14b voneinander trennen, sind Bereiche ohne einen Trennsteg frei gelassen. Diese Bereiche ohne Trennsteg liegen in Transportrichtung T gesehen jeweils vor einem Andockbereich 17 und ermöglichen einen Spurwechsel eines Werkstückträgers 50 von einer Spur 14b, 14a auf die andere 14a, 14b.

Auf der Tischplatte des Tisches 12 sind zudem insgesamt 9 halbkugelförmige Ausnehmungen 13 ausgebildet, deren Funktion ebenfalls später erläutert werden soll.

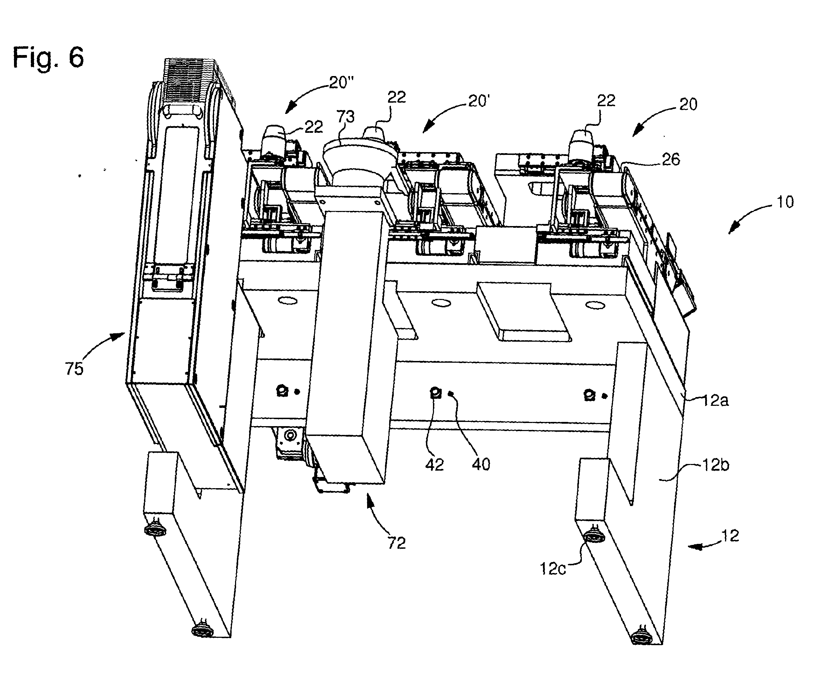

In Fig. 6, die eine perspektivische Ansicht des Grundgestells 10 aus Fig. 1 mit drei darauf montierten Fertigungseinheiten 20, 20', 20" zeigt, sieht man, dass an dem Tisch 12 unterhalb der Tischplatte 12a Anschlüsse 40, 42 vorgesehen sind. Insgesamt sind drei Anschlusspaare vorgesehen, wobei jedes Anschlusspaar einen Anschluss für Druckluft 40 und eine elektrische Schnittstelle 42 umfasst. Die elektrische Schnittstelle 42 kann dabei sowohl zur Anbindung an ein Netzwerk als auch zur Energieversorgung dienen. In dem Tisch 12 verläuft parallel zu dem Transportband 14 ein in den Figuren nicht sichtbarer Kabelkanal, durch den elektrische Kabel und eine Druckluftleitung geführt sind, welche die einzelnen Anschlüsse 40, 42 miteinander verbinden.

Fig. 2 zeigt sechs der in Fig. 1 dargestellten Grundgestelle 10, die zusammen eine Basis für eine Fertigungslinie zu bilden. Jeweils drei Tische 12 sind nebeneinander angeordnet, sodass ihre Querseiten sich berühren, und die drei Transportbänder 14 eine kontinuierliche geradlinige Transportstrecke bilden. Dabei liegt jeweils der rechts an jedem Tisch 12 vorgesehene Umlenkungspunkt 15' mit einer Umlenkwalze mit vergleichsweise grossem Radius neben dem links an dem nächsten Tisch vorgesehenen Umlenkungspunkt 15 mit der fest eingespannten dünnen Umlenkwelle mit drehbar gelagerten Gleitbuchsen. Die hintereinander liegenden Transportbänder 14 bilden somit eine quasi lückenlose Transportstrecke.

Gegenüber von den drei in einer Reihe angeordneten Tischen 12 sind drei weitere ebenfalls in einer Reihe angeordnete Tische 12 aufgebaut, wobei jeweils die Längsseiten der Tische 12, an denen die Transportbänder 14 befestigt sind, sich berühren. Insgesamt entsteht so eine rechteckige Anordnung aus sechs Grundgestellen 10, in deren Mitte in Längsrichtung zwei parallel verlaufende Transportstrecken aus je drei Transportbändern 14 angeordnet sind. An den beiden Querseiten der gesamten Anordnung ist jeweils ein Umlenkband 23, 23' vorgesehen, das die beiden einander gegenüberliegenden Transportstrecken miteinander verbindet. Ein Werkstückträger 50 wird auf der in Fig. 2 gezeigten Anordnung also zuerst über eine erste von drei hintereinander liegenden Transportbändern 14 gebildete geradlinige Transportstrecke in die Transportrichtung T transportiert, gelangt dann auf das erste Umlenkband 23, wobei seine Transportrichtung sich um 180° ändert, und wird dann auf der gegenüberliegenden, ebenfalls von drei Transportbändern 14 gebildeten Transportstrecke nun in die Gegenrichtung T' zu dem zweiten Umlenkband 23' transportiert.

Wenn mehrere Grundgestelle 10 nebeneinander aufgebaut werden, dann können die Leitungen und Kabel, die in dem oben erwähnten Kabelkanal in jedem Tisch 12 verlaufen, miteinander verbunden werden, sodass für die gesamte Fertigungslinie eine durchgehende Druckluftleitung, eine durchgehende Energieversorgung und eine durchgehende Netzwerkanbindung existiert. Es genügt dann, eines der Grundgestelle 10 mit einer Energiequelle, einer Druckluftquelle (eventuell mit einem Druckluftreservoir) und einem Zentralcomputer zu verbinden, um Druckluft und Energie über die Anschlüsse 40, 42 an die einzelnen Fertigungseinheiten 20, 20', 20" zu verteilen.

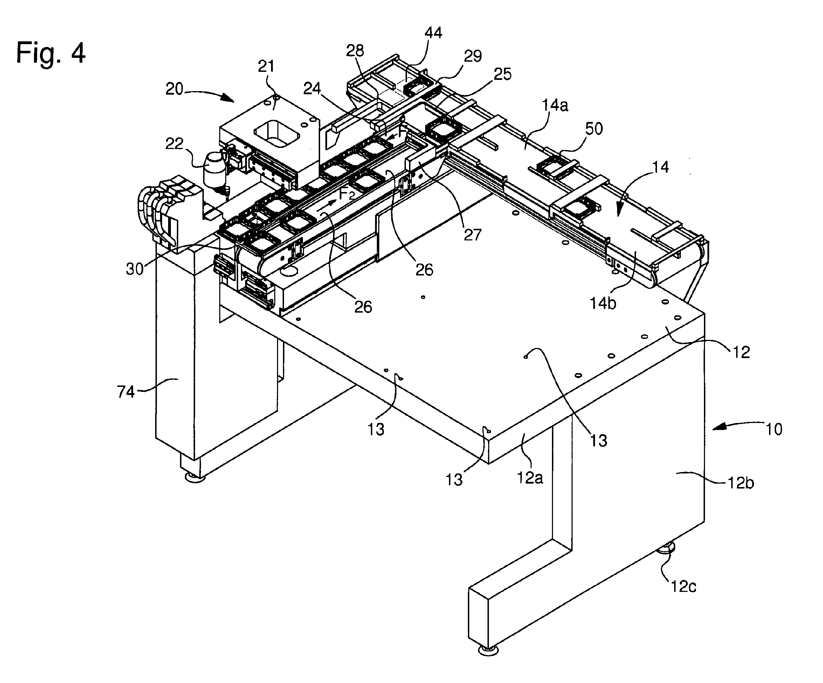

Fig. 3 zeigt eine perspektivische Ansicht einer Fertigungseinheit 20, die auf einem Grundgestell 10 der zuvor beschriebenen Art befestigt werden kann. Die Fertigungseinheit 20 besitzt einem in etwa quaderförmigen Grundkörper 31, der ein Drittel der Oberfläche der Tischplatte 12a belegt, wenn die Fertigungseinheit auf dem Grundgestell befestigt ist (vgl. Fig. 4). Um die Montage der Fertigungseinheit 20 auf dem Grundgestell 10 zu erleichtern, sind an der Unterseite des Grundkörpers 31 drei drehbar gelagerte Stahlkugeln vorgesehen, die in den Figuren nicht dargestellt sind. Die Lage dieser drehbar gelagerten Stahlkugeln entspricht der Lage von drei in einem Dreieck angeordneten halbkugelförmigen Ausnehmungen 13 in der Tischplatte 12a des Grundgestells 10 (vgl. Fig. 1 und 2). Bei der Montage der Fertigungseinheit 20 auf dem Grundgestell 10 kann die Fertigungseinheit 20 zunächst auf der Tischplatte 12a abgestellt werden und kann dann mit Hilfe der an der Unterseite des Grundkörpers 31 vorgesehenen Kugeln rollend verschoben werden, bis die Kugeln in den drei Ausnehmungen 13 sitzen, und die Fertigungseinheit 20 somit korrekt positioniert ist. Wie man in Fig. 4 sieht, liegt bei der korrekt positionierten Fertigungseinheit 20 ein Teil des Grundkörpers 31 unterhalb des Transportbandes 14. Zur Halterung der Fertigungseinheit können zusätzliche mechanische Befestigungsmittel vorgesehen sein. Vor Inbetriebnahme der Fertigungslinie werden zudem die Anschlüsse 40, 42 an dem Grundgestell 10 über geeignete Schläuche und Kabel mit entsprechenden Anschlüssen an der Fertigungseinheit 20 verbunden.

Die Fertigungseinheit 20 weist zwei parallel verlaufende, endlos umlaufende Förderbänder 24, 26 auf, die in einander entgegen gesetzte Förderrichtungen F₁, F₂ angetrieben sind. Wenn die Fertigungseinheit 20 auf im Grundgestell 10 befestigt ist, verlaufen die beiden Förderbänder 24, 26 senkrecht zu dem Transportband 14. Das in Fig. 3 hintere Förderband 24 dient dem Befördern eines Werkstückträgers 50 von dem Transportband 14 zu einem Funktionselement 22, während das in Fig. 3 vorne liegende Förderband 26 die Werkstückträger 50 wieder zurück zu dem Transportband 14 befördert. Am Anfang des ersten Förderbandes 24, das heisst an dessen bei montierter Fertigungseinheit 20 dem Transportband 14 zugewandter Seite, sitzt ein in Richtung der Förderrichtung F₁ dieses Bandes 24 verschiebbarer Schieber 25, der einen Werkstückträger 50 von dem Transportband 14 auf das erste Förderband 26 schieben kann. Am anderen Ende des ersten Förderbandes 24 ist ein Schieber 30 vorgesehen, der mit Hilfe eines Motors 32 und an der Stirnseite des Grundkörpers 31 befestigter Schienen 34 senkrecht zu der Förderrichtung F₁ des ersten Förderbandes 24 verschoben werden kann. Mit Hilfe dieses Schiebers 30 kann ein Werkstückträger 50 von dem ersten Förderband 24 auf das zweite Förderband 26 geschoben werden, und wird somit wieder zurück in Richtung des Transportbands 14 geschickt. Am Ende des zweiten Förderbandes 26, das heisst an dessen bei montierter Fertigungseinheit 20 dem Transportband 14 zugewandter Seite, sitzt ein in Richtung der Förderrichtung F₂ dieses Bandes 26 verschiebbarer zweiter Schieber 27, der einen Werkstückträger 50 von dem zweiten Förderband 26 wieder auf das Transportband 14 schieben kann.

In Bezug auf die Transportrichtung T des Transportbandes 14 hinter diesen beiden Schiebern 25, 27 sind bei der in Fig. 3 gezeigten Fertigungseinheit 20 zwei weitere Schieber 28, 29 vorgesehen. Der Schieber 29 dient dazu, einen Werkstückträger 50, der auf der Fertigungseinheit abgewandten Spur 14a transportiert wird, auf die der Fertigungseinheit 20 zugewandte Spur 14b zu verschieben. Mit Hilfe des zweiten Schiebers 28 kann umgekehrt ein Werkstückträger 50, der von der Station 20 nicht bearbeitet werden soll, von der Spur 14b auf die Spur 14a verschoben werden. Die beiden Schieber 28, 29 nutzen dabei beide die weiter oben erwähnte Lücken zwischen den die beiden Spuren 14a, 14b voneinander trennenden Trennstegen 16 aus. In der in den Figuren 3 und 4 dargestellten Ruhestellung der beiden Schieber 28, 29 können Werkstückträger 50 auf beiden Spuren 14a, 14b ungehindert transportiert werden. Werden die Schieber 28, 29 in Richtung F₂ beziehungsweise F₁ verschoben, so wird ein Werkstückträger 50 durch die Lücke zwischen den Trennstegen 16 von einer Spur 14b, 14a auf die andere 14a, 14b verschoben. Sämtliche Schieber 25, 27, 28, 29 werden von einer in die Fertigungseinheit integrierten Steuereinheit gesteuert. Die Geschwindigkeitskurve der Schieber 25, 27, 28, 29 verläuft dabei sinusförmig, das heisst die Schieber werden jeweils bis zu einer maximalen Geschwindigkeit beschleunigt und dann wieder abgebremst.

In Fig. 3 erkennt man zudem das über einen Träger 21 an der Fertigungseinheit 20 befestigte Funktionselement 22, bei dem es sich bei dem hier dargestellten Ausführungsbeispiel um einen so genannten "pick- and-place"-Roboter handelt. Dieser Roboter 22 kann ein von einer in Fig. 3 nicht gezeigten Zuführungseinheit bereitgestelltes Bauteil greifen und mit Hilfe eines an einem verschwenkbaren Arm befestigten Werkzeuges 36 auf einem Werkstück anbringen. Der Roboter ist an dem Träger 21 entlang zweier Achsen x, z verschiebbar befestigt und kann des Weiteren um eine vertikale Achse in einer horizontalen Ebene x-y verschwenkt werden. Derartige Roboter sind grundsätzlich bereits bekannt, und der in diesem Beispiel verwendete Roboter soll daher hier nicht weiter beschrieben werden. Als Funktionselement können nicht nur beliebige Roboter, insbesondere auch zum Durchführen von Messungen oder Tests geeignete Roboter, sondern beliebige Bearbeitungseinheiten verwendet werden. Sowohl der Antrieb für das Funktionselement 22 als auch die Antriebe für die Förderbänder 24, 26 und die Schieber 25, 27, 28, 29 sind in die Fertigungseinheit 20 integriert.

Bei den in den Figuren dargestellten Fertigungseinheiten 20, 20', 20" ist das Funktionselement 22 in Bezug auf die Transportrichtung T des Transportbandes 14 jeweils vor den beiden Förderbändern 24, 26 angeordnet. Wenn anstelle der hier gezeigten Schieber andere Ausschleuselemente verwendet werden, beispielsweise die oben bereits erwähnte Weiche, kann die Anordnung der beiden Bänder 24, 26 und des Funktionselementes auch vertauscht werden. In diesem Fall liegen die beiden Bänder 24, 26 dann nicht wie in Fig. 3 gezeigt rechts von dem Funktionselement 22, sondern links von diesem. Dies ist bei der Verwendung der in der oben erwähnten Patentanmeldung beschriebenen Weiche möglich, weil ein eventueller Spurwechsel und ein Ausschleusen von dem Transportband 14 zu dem ersten Förderband 24 direkt nacheinander durchgeführt werden können, ohne dass der Werkstückträger 50 dazwischen auf dem Transportband 14 weiter transportiert wird.

In die Fertigungseinheit 20 integriert sind zudem zwei in den Figuren nicht dargestellte RFID - Leseköpfe und eine in den Figuren ebenfalls nicht dargstellte Schreibeinheit zum Beschreiben eines in einen RFID - Transponder integrierten Speichers. Es können auch weitere zusätzliche Lese- und/oder Schreibköpfe vorgesehen sein, beispielsweise, um festzustellen, welche Flächen auf dem Transportband 14 und den Förderbändern 24, 26 jeweils gerade belegt sind.

Jeder der Werkstückträger 50 ist mit einem RFID - Transponder versehen, der einen beschreibbaren Speicher besitzt. In diesem Speicher wird zu Beginn die Reihenfolge der durchzuführenden Schritte, das heisst die Reihenfolge der anzusteuernden Fertigungseinheiten 20, 20', 20" und/oder Handarbeitsplätze abgespeichert. Beispielsweise kann jeder Fertigungseinheit 20, 20', 20" eine Kennnummer zugeordnet werden, wobei diese Kennnummern dann in der gewünschten Reihenfolge gespeichert werden.

Die Leseköpfe sind an derjenigen Seite der Fertigungseinheit 20 angebracht, die bei montierter Fertigungseinheit 20 in Richtung des Transportbandes 14 weist. In Fig. 4 sind die Bereiche, in denen die beiden Leseköpfe bei eingebauter Fertigungseinheit 20 zu liegen kommen, mit der Bezugsziffer 44 bezeichnet. Man sieht, dass die Leseköpfe unter dem Transportband 14 zu liegen kommen, sodass ein an einem Werkstückträger 50 befestigter RFID - Transponder ausgelesen werden kann, wenn der Werkstückträger 50 auf einer der beiden Spuren 14a, 14b des Transportbandes 14 den darunter liegenden Lesekopf passiert. Wie man in Fig. 4 erkennt, liegen die Leseköpfe in Bezug auf die Transportrichtung T des Transportbandes 14 noch vor den für einen Spurwechsel zuständigen Schiebern 28, 29, sodass letztere in Abhängigkeit von den mittels der Leseköpfe ausgelesenen Daten betätigt werden können. Die Schreibeinheit hingegen, die in den Figuren nicht dargestellt ist, liegt unter dem zweiten Förderband 26 und dient dazu, den von dem Funktionselement durchgeführten Bearbeitungsschritt als erledigt zu markieren oder zu löschen.

Wenn ein Werkstückträger 50 von dem Transportband 14 über einen der beiden Leseköpfe transportiert wird, gibt der Lesekopf die gespeicherten Informationen an die Steuereinheit der Fertigungseinheit 20 weiter. In den Steuereinheiten der Fertigungseinheiten 20, 20', 20" ist jeweils die der jeweiligen Fertigungseinheit 20, 20', 20" zugeordnete Kennnummer gespeichert. Die Steuereinheit kann also nach Erhalt der Daten von dem Lesekopf prüfen, ob der in dem Speicher des RFID-Transponders gespeicherte nächste durchzuführende Bearbeitungsschritt derjenige ist, der von der vorliegenden Fertigungseinheit 20 durchgeführt wird, beispielsweise durch einen einfachen Vergleich der Kennnummern. Im Fall einer Übereinstimmung wird die Steuerung den Befehl erteilen, den betreffenden Werkstückträger 50 auf das Förderband 24 der Fertigungseinheit 20 zu verschieben. Hierzu wird zunächst, falls der Werkstückträger 50 sich auf der dem Förderband 24 abgewandten Spur 14a befindet, der Schieber 29 aktiviert, welcher den Werkstückträger 50 auf die "Abbiegespur" 14b schiebt. Im Anschluss wird der Schieber 25 betätigt, welcher den Werkstückträger 50 dann auf das Förderband 24 schiebt. Von dem Förderband 24 wird der Werkstückträger 50 anschliessend zu dem Funktionselement 22 befördert, von dem der entsprechende Bearbeitungsschritt ausgeführt wird. Danach wird der Schieber 30 betätigt, um den Werkstückträger 50 mit dem nun bearbeiteten Werkstück auf das zweite Förderband 26 zu schieben.

Die unterhalb des zweiten Förderbandes 26 angeordnete Schreibeinheit markiert in dem beschreibbaren Speicher des Werkstückträgers den nun durchgeführten Bearbeitungsschritt als erledigt, sodass der nachfolgende Bearbeitungsschritt von einem der Leseköpfe der nächsten Fertigungseinheit identifiziert werden kann.

Da sowohl die Leseköpfe als auch die Schreibeinheit und die Steuereinheit Bestandteil der Fertigungseinheit 20 sind, und die nötigen Information alle entweder in der Steuerung der Fertigungseinheit 20 oder in dem Speicher des an dem Werkstückträger 50 angebrachten RFID-Transponders gespeichert sind, kann im Prinzip auf eine zentrale Steuerung verzichtet werden. Zu Überwachungszwecken können zwar die einzelnen Fertigungseinheiten 20, 20', 20" über die oben erwähnten, in den Grundgestellen 10 vorgesehenen Netzwerkkabel und Anschlüsse 42 vernetzt und mit einem Zentralcomputer verbunden sein, dieser Zentralcomputer wird aber zur Steuerung der gesamten Linie nicht benötigt. Wird beim Umrüsten der Fertigungslinie eine Fertigungseinheit 20, 20', 20" gegen eine andere ausgetauscht, so sind keine Anpassungen einer Steuerung nötig, da die betreffende Steuerung in der Fertigungseinheit selbst implementiert ist. Die Fertigungseinheiten 20 müssen zudem nicht unbedingt in der Reihenfolge auf den Grundgestellen montiert werden, in der die Bearbeitungsschritte ablaufen sollen. Wenn die Reihenfolge der durchzuführenden Bearbeitungsschritte, und damit die Reihenfolge, in der die einzelnen Fertigungseinheiten angesteuert werden, geändert werden soll, so genügt es, den Speicher des RFID Transponders des Werkstückträgers 50 entsprechend zu beschreiben.

In Fig. 4 ist nicht nur die in Fig. 3 gezeigte Fertigungseinheit 20, sondern zudem auch ein Zuführeinheit 74 an dem Grundgestell 10 befestigt. Bei der Zuführeinheit handelt sich um ein im Handel erhältliches und bereits bekanntes Modell, welches hier nicht mehr beschrieben werden soll.

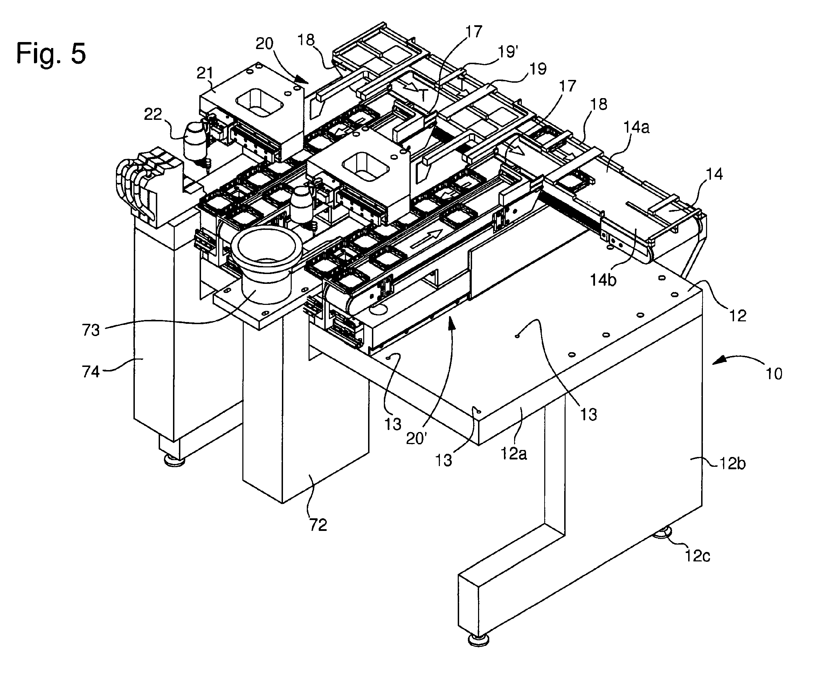

In Fig. 5 ist die Anordnung aus Fig. 4 gezeigt, wobei eine weitere Fertigungseinheit 20' montiert ist. Diese Fertigungseinheit 20' ist ebenfalls mit einer Zuführeinheit 72 mit einem Fördertopf 73 für die Zufuhr von Teilen ausgestattet. Ansonsten entspricht sie der in Fig. 3 dargestellten und in diesem Zusammenhang beschriebenen Fertigungseinheit 20.

Fig. 6 zeigt eine weitere Anordnung mit drei Fertigungseinheiten 20, 20', 20" auf einem Grundgestell 10. Die Fertigungseinheiten 20', 20", welche in Fig. 6 links dargestellt sind, sind beide mit einer Zuführeinheit 72, 75 versehen, während die in Fig. 6 rechts dargestellte Fertigungseinheit 20 ohne eine Zuführeinheit dargestellt ist. Eine Zuführeinheit ist nicht zwangsläufig erforderlich, da selbstverständlich Bearbeitungsschritte denkbar sind, bei denen keine zusätzlichen Teile benötigt werden. Darüber hinaus ist auch eine Teilezufuhr von Hand denkbar.

Im Prinzip sind die in den Figuren dargestellten Tische 12 und die Fertigungseinheiten 20 so dimensioniert, dass jeweils drei Fertigungseinheiten 20, 20', 20" nebeneinander auf einem Tisch 12 befestigt werden können (vgl. Fig. 6). Die in Fig. 2 gezeigt Anordnung mit sechs Tischen 12 bietet somit also Platz für achtzehn Fertigungseinheiten. Wenn einer der für eine Fertigungseinheit vorgesehenen Plätze auf einem Tisch 12 nicht besetzt ist, so hat dies jedoch keinen Einfluss auf den Ablauf des Fertigungsprozesses, da die Werkstückträger 50 ohne Unterbrechung von dem Transportband 14 transportiert werden. Anstelle von Fertigungseinheiten 20 können auch Handarbeitsplätze vorgesehen werden, wobei diese dann eventuell mit einem Ausschleusungsmechanismus ausgestattet werden, der im Prinzip den beiden Förderbändern 24, 26 mit den Schiebern 25, 27, 28, 29 und dem Lesekopf, der Schreibeinheit und der mit diesen beiden verbundenen Steuerungen entspricht.

### Bezugszeichenliste

- 10: Grundgestell
- 11: Gestell für Umlenkwalzen
- 12: Tisch
- 12a: Tischplatte
- 12b: Seitenteile Tisch
- 12c: Füsse Tisch
- 13: Zentrierausnehmungen
- 14: Transportband
- 14a, 14b: Spur auf Transportband
- 15,15': Umlenkpunkt
- 16: Trennsteg
- 17: Andockbereich
- 18, 18': Begrenzungssteg
- 19, 19': Brücke
- 20, 20', 20": Fertigungseinheit
- 21: Träger
- 22: Funktionselement
- 23: Umlenkband
- 24: Förderband
- 25: Schieber
- 26: Förderband
- 27, 28, 29: Schieber
- 30: Schieber Bandwechsel
- 31: Grundkörper Fertigungseinheit
- 32: Motor
- 34: Schiene
- 36: Werkzeug
- 40: Anschluss Druckluft
- 42: elektrische Schnittstelle
- 44: Ort, unter dem Lesekopf angeordnet ist
- 50: Werkstückträger
- 72: Zuführeinheit
- 73: Fördertopf
- 74,75: Zuführeinheit
- F₁: Förderrichtung
- F₂: Förderrichtung
- T: Transportrichtung
- x, y, z: Achsen

## Patentansprüche

1. Modulare Fertigungslinie mit wenigstens einem Grundgestell (10), auf dem ein Transportband (14) zum Transportieren von Werkstückträgern (50) verläuft, und einer Vielzahl von auf dem Grundgestell (10) befestigbaren Fertigungseinheiten (20, 20', 20"), wobei jede Fertigungseinheit (20, 20', 20") ein Funktionselement (22), eine Steuereinheit, Mittel (24, 25) zum Befördern eines Werkstückträgers (50) von dem Transportband (14) zu dem Funktionselement (22) und Mittel (26, 27) zum Befördern eines Werkstückträgers (50) von dem Funktionselement (22) zu dem Transportband (14) umfasst, wobei die Mittel (24. 25) zum Befördern eines Werkstückträgers (50) von dem Transportband (14) zu dem Funktionselement (22) ein erstes Förderband (24) und die Mittel (26, 27) zum Befördern eines Werkstückträgers (50) von dem Funktionselement (22) zu dem Transportband (14) ein zweites Förderband (26) umfassen,
**dadurch gekennzeichnet, dass** die Mittel (24, 25) zum Befördern eines Werkstückträgers (50) von dem Transportband (14) zu dem Funktionselement (22) einen oberhalb des ersten Förderbandes (24) angeordneten und in dessen Förderrichtung (F₁) beweglichen ersten Schieber (25) und die Mittel (26, 27) zum Befördern eines Werkstückträgers (50) von dem Funktionselement (22) zu dem Transportband (14) einen oberhalb des zweiten Förderbandes (26) angeordneten und in dessen Förderrichtung (F₂) beweglichen zweiten Schieber (27) umfassen, und dass eine Fertigungseinheit (20) zumindest einen weiteren Schieber (28, 29) umfasst, der in Transportrichtung (T) des Transportbandes (14) vor den Mitteln (24, 25) zum Befördern eines Werkstückträgers (50) von dem Transportband (14) zu dem Funktionselement (22) angeordnet ist, und der geeignet ist, einen Werkstückträger (50) auf dem Transportband (14) senkrecht zu dessen Transportrichtung (T) zu verschieben.

2. Modulare Fertigungslinie nach Anspruch 1,
**dadurch gekennzeichnet, dass** das Transportband (14) etwa doppelt so breit ist wie die beiden Förderbänder (24, 26).

3. Modulare Fertigungslinie nach einem der vorstehenden Ansprüche,
**dadurch gekennzeichnet, dass** das Grundgestell (10) einen Antrieb zum Antreiben des Transportbandes (14) aufweiset.

4. Modulare Fertigungslinie nach einem der vorstehenden Ansprüche,
**dadurch gekennzeichnet, dass** das Grundgestell (10) einen vorzugsweise aus Granit bestehenden Tisch (12) mit einer rechteckigen Tischplatte (12a) umfasst, wobei das Transportband (14) an einer Längsseite des Tisches (12) befestigt ist und parallel zu dieser verläuft.

5. Modulare Fertigungslinie nach einem der vorstehenden Ansprüche,
**dadurch gekennzeichnet, dass** an einer Unterseite der Fertigungseinheiten (20, 20', 20") jeweils wenigstens zwei, vorzugsweise drei Zentrierelemente vorgesehen sind, welche mit komplementären Zentrierelementen (13) auf einer Oberfläche des Grundgestells (10) zusammenwirken.

6. Modulare Fertigungslinie nach einem der vorstehenden Ansprüche,
**dadurch gekennzeichnet, dass** eine der Fertigungseinheiten (20, 20', 20") eine Zuführeinrichtung (72, 74, 75) zum Zuführen von Teilen umfasst.

7. Modulare Fertigungslinie nach einem der vorstehenden Ansprüche,
**dadurch gekennzeichnet, dass** die Fertigungseinheiten (20, 20', 20") jeweils mit wenigstens einer Leseeinheit versehen sind, die mit der Steuereinheit verbunden ist.

8. Modulare Fertigungslinie nach Anspruch 7,
**dadurch gekennzeichnet, dass** die Fertigungseinheiten mit einer Schreibeinheit versehen sind, welche in einem mit einem Werkstückträger (50) verbundenen Speicher gespeicherte Daten modifizieren kann.

9. Modulare Fertigungslinie nach Anspruch 7 oder 8,
**dadurch gekennzeichnet, dass** die Steuerung mit den Mitteln (24, 25) zum Befördern eines Werkstückträgers von dem Transportband (14) zu dem Funktionselement (22) gekoppelt ist.

10. Modulare Fertigungslinie nach einem der Ansprüche 7 bis 9,
**dadurch gekennzeichnet, dass** die Leseeinheiten derart an den Fertigungseinheiten (20, 20', 20") befestigt sind, dass sie jeweils unterhalb des Transportbandes (14) liegen, wenn die jeweilige Fertigungseinheit (20, 20', 20") an dem Grundgestell (10) befestigt ist.

11. Verfahren zum Betreiben einer modularen Fertigungslinie nach einem der vorstehenden Ansprüche, umfassend die folgenden Verfahrensschritte:
- Transportieren von mit einem Speicher versehenen Werkstückträgern (50) auf dem Transportband (14) mit zwei Spuren (14a,14b), wobei in dem Speicher eine Reihenfolge durchzuführender Montageschritte abgespeichert ist,
- Auslesen eines in diesem Speicher gespeicherten Wertes, welcher den nächsten durchzuführenden Montageschritt repräsentiert,
- Vergleichen dieses Werts mit einem den von der betreffenden Fertigungseinheit (20, 20', 20") durchführbaren Montageschritt repräsentierenden Wert, und im Fall einer Übereinstimmung der beiden Werte:
- Befördern der Werkstückträger (50) von dem Transportband (14) zu dem Funktionselement (22),
- Durchführen eines Bearbeitungsschrittes durch das Funktionselement (22),
- Modifizieren der in dem Speicher des Werkstückträgers (50) gespeicherten Daten, und
- Befördern des Werkstückträgers (50) von dem Funktionselement (22) zu dem Transportband (14),
- Verschieben des Werkstückträgers (50) von einer Spur (14a,14b) des Transportbandes auf die andere Spur (14a,14b)

## Claims

1. Modular production line comprising at least a base support (10), on which a transport belt (14) runs for transporting workpiece carriers (50), and a plurality of production units (2.0, 20', 20") affixable to the base support (10), wherein each production unit (20, 20', 20") comprises a functional element (22), a control unit, means (24, 25) for carrying a workpiece carrier (50) from the transport belt (14) to the functional element (22), and means (26, 27) for carrying a workpiece carrier (50) from the functional element (22) to the transport belt (14), wherein the means (24, 25) for carrying a workpiece carrier (50) from the transport belt (14) to the functional element (22) comprise a first convey band (24) and the means (26, 27) for carrying a workpiece carrier (50) from the functional element (22) to the transport belt (14) comprise a second convey band (26), **characterised in that**
the means (24, 25) for carrying a workpiece carrier (50) from the transport belt (14) to the functional element (22) comprise a first slider (25), which is arranged above the first convey band (24) and is movable in the convey direction (F₁) of the latter; the means (26, 27) for carrying a workpiece carrier (50) from the functional element (22) to the transport belt (14) comprise a second slider (27), which is arranged above the second convey band (26) and is movable in the convey direction (F₂) of the latter, and **in that**
a production unit (20) comprised at least an additional slider (28, 29), which is arranged in the transport direction (T) of the transport belt (14), before means (24, 25) for carrying a workpiece carrier (50) from the transport belt (14) to the functional element (22), and which is suitable for moving a workpiece carrier (50) in a direction perpendicular to the transport direction (T) on the transport belt (14).

2. Modular production line according to claim 1, **characterised in that** the transport belt (14) is about twine as large as each convey band (24,26).

3. Modular production line according to any of the previous claims, **characterised in that** the base support (10) comprises drive means for driving the transport belt (14).

4. Modular production line according to any of the previous claims, **characterised in that** the base support (10) comprise a table (12) with a rectangular plate (12a), preferably made of granite, wherein the transport belt (14) is fixed to the length of the table (12) and runs in a direction parallel to it.

5. Modular production line according to any of the previous claims, **characterised in that** at respectively least two, and preferable three centring elements are foreseen on the underside of the production units (20, 20', 20"), which interact with complementary centring elements (13) arranged on a surface of the base support (10).

6. Modular production line according to any of the previous claims, **characterised in that** one of the production units (20, 20', 20") comprises a feeder unit (72, 74, 75) for supplying workpieces.

7. Modular production line according to any of the previous claims, **characterised in that** the production units (20, 20', 20") are each provided with at least one reading unit, which is connected to the control unit.

8. Modular production line according to claim 7, **characterised in that** the production units are provided with a writing unit, which can modify data stored in a memory connected to a workpiece carrier (50).

9. Modular production line according to claim 7 or 8, **characterised in that** the control unit is coupled with the means (24, 25) for carrying a workpiece carrier (50) from the transport belt (14) to the functional element (22).

10. Modular production line according to any of claims 7 to 9, **characterised in that** the reading units are fixed to the production units (20, 20', 20") so as to respectively lie under the transport belt (14) when the respective production units (20, 20', 20") are fixed to the base support (10).

11. Method for operating a modular production line according to any of the previous claims, comprising the subsequent process claims:
- transporting workpiece carriers (50) provided with a memory unit on a transport belt (14) with two tracks (14a,14b), whereby sequence of mounting steps to execute is stored in the memory,
- reading out of a value stored in this memory, which represents the next amounting step to execute;
- comparing this value with one of those representing a mounting step which can be accomplished by one of the production units (20, 20', 20") concerned, and in case of concordance of both values:
- carrying of the workpiece carrier (50) from the transport band (14) to the functional element (22),
- Executing of the processing step by the functional element (22),
- Modifying the data stored in the memory of the workpiece carrier (50), rand
- carrying of the workpiece carrier (50) from the functional element (22) to the transport belt (14),
- misplacing the workpiece carrier (50) from one of the tracks (14a,14b) of the transport belt to the other track (14a,14b).

## Revendications

1. Ligne de fabrication modulaire comprenant au moins un support de base (10), sur lequel défile une bande de transport (14) pour le transport de porte-pièces (50), et une pluralité d'unités de fabrication (20, 20', 20") fixables au support de base (10), chaque unité de fabrication (20, 20', 20") comprenant un élément fonctionnel (22), une unité de commande, des moyens (24, 25) pour acheminer un porte-pièce (50) depuis la bande de transport (14) à l'élément fonctionnel (22), et des moyens (26, 27) pour acheminer un porte-pièce (50) depuis l'élément fonctionnel (22) à la brande de transport (14), lesdits moyens (24, 25) pour acheminer un porte-pièce (50) depuis la bande de transport (14) à l'élément fonctionnel (22.) comprenant une première bande de transport (24) et lesdits moyens (26, 27) pour- acheminer un porte-pièce (50) depuis l'élément fonctionnel (22) à la bande de transport (14) comprenant une deuxième bande de transport (26), **caractérisé en ce que**
lesdits moyens (24, 25) pour acheminer un porte-pièce (50) depuis la bande de transport (14) à l'élément fonctionnel (22) comprennent un premier curseur (25) agencé au dessus de la première bande de transport (24) et pouvant se déplacer dans la direction d'acheminement (F₁) de cette dernière, lesdits moyens (26, 27) pour acheminer un porte-pièce (50) depuis l'élément fonctionnel (22) à la bande de transport (14) comprennent un deuxième curseur (27) agencé au dessus de la deuxième bande de transport (26) et pouvant se déplacer dans une direction d'acheminement (F₂) de cette dernière, et que
une unité de fabrication (20) comprend au moins un curseur additionnel (28, 29), qui est agencé dans la direction du transport (T) de la bande de transport (14) avant lesdits moyens (24, 25) pour acheminer un porte-pièce (50) depuis la bande de transport (14) à l'élément fonctionnel (22), et qui est adapté pour déplacer un porte-pièce (50) dans une direction perpendiculaire à la direction du transport (T) sur la bande de transport

2. Ligne de fabrication modulaire selon la revendication 1, **caractérisée en ce que** la bande de transport (14) est environ deux fois aussi large que les deux bandes de transport (24,26).

3. Ligne de fabrication modulaire selon l'une des revendications précédentes, **caractérisée en ce que** le support de base (10) comprend des moyens d'entraînement pour entraîner la bande de transport (14).

4. Ligne de fabrication modulaire selon l'une des revendications précédentes, **caractérisée en ce que** le support de base (10) comprend une table (12) constituée de préférence en granit, avec un plateau (12a) à angles droits, ladite bande de transport (14) étant fixée à une longueur de ladite table (12) et défilant parallèle à celle-ci.

5. Ligne de fabrication modulaire selon l'une des revendications précédentes, **caractérisée en ce que** respectivement au moins deux, et de préférence trois éléments de centrage, qui interagissent avec des éléments de centrage complémentaires (13) disposés sur une surface du support de base (10), sont prévus sous la face inférieure des unités de fabrication (20, 20', 20").

6. Ligne de fabrication modulaire selon l'une des revendications précédentes, **caractérisée en ce qu'**une des unités de fabrication (20, 20', 20") comprend une unité d'alimentation (72, 74, 75) pour l'alimentation en pièces.

7. Ligne de fabrication modulaire selon l'une des revendications précédentes, **caractérisée en ce que** les unités de fabrication (20, 20', 20") sont chacune équipées d'au moins une unité de lecture, qui sont reliées à l'unité de commande.

8. Ligne de fabrication modulaire selon la revendication 7, **caractérisée en ce que** les unités de fabrication sont équipées d'une unité d'écriture, qui peuvent modifier des données sauvegardées dans une mémoire reliée à un porte-pièces (50).

9. Ligne de fabrication modulaire selon l'une des revendications 7 ou 8, **caractérisée en ce que** la commande est couplée aux moyens (24, 25) pour acheminer un porte-pièce (50) depuis la bande de transport (14) à l'élément fonctionnel (22).

10. Ligne de fabrication modulaire selon l'une des revendications 7 à 9, **caractérisée en ce que** les unités de lecture sont fixées aux unités de fabrication (20, 20', 20") de telle sorte qu'elles se trouvent chacune en dessous de la bande de transport (14) lorsque chaque unité de fabrication (20, 20', 20") est respectivement fixée au support de base (10).

11. Procécé pour l'exploitation d'une ligne de fabrication modulaire selon l'une des revendications précédentes, comprenant les étapes de procédé suivantes:
- transport de porte-pièces (50) équipés d'une mémoire sur une bande de transport (14) à deux voies (14a,14b), une séquence d'étapes de montage à effectuer étant sauvegardée dans la mémoire,
- lecture d'une valeur sauvegardée dans cette mémoire, qui représente l'étape de montage suivante à effectuer;
- comparaison de cette valseur avec une de celles représentant une étape de montage exécutable par une des unités de fabrication (20, 20', 20") concernées, et en cas de concordance de ces deux valeurs:
- acheminement du porte-pièce (50) de la bande de transport (14) à l'élément fonctionnel (22),
- Exécution de l'étape de traitement par l'élément fonctionnel (22),
- Modification des données sauvegardées dans la mémoire du porte-pièces (50), et
- acheminement du porte-pièce (50) de l'élément fonctionnel (22) à la bande de transport (14),
- déplacement du porte- pièces (50) d'une des voies (14a,14b) de la bande de transport à l'autre voie (14a,14b).
